# EUROPEAN PATENT APPLICATION

(11) **EP 4 768 274 A1**
(43) Date of publication of application: **01.07.2026**
(21) Application number: 25226760.4
(22) Date of filing: 23.12.2025
(51) Int. Cl.: B60C 1/00, C08L 9/00, C08L 9/06

(54) **RUBBER COMPOSITION AND PNEUMATIC TIRE**

(30) Priority: 26.12.2024 JP 2024229639; 26.12.2024 JP 2024229651
(71) Applicant: Toyo Tire Corporation, Itami-shi, Hyogo 664-0847 (JP)
(72) Inventor: HASHIMOTO, Akari, HYOGO (JP)
(74) Representative: Cabinet Beau de Loménie

(57) **Abstract**

The invention relates to a rubber composition comprising a diene-based rubber, graphene and optionally silica, wherein the graphene is graphene having a specific surface area of 200 m²/g or less, a particle size of 10 µm or less, an average thickness of particles of 10 nm or less, and an oxygen content of 1% by mass or less.

The invention also relates to a pneumatic tire comprising a vulcanized rubber of the rubber composition defined above.

## Description

### BACKGROUND OF THE INVENTION

### Field of the Invention

The present invention relates to a rubber composition and a pneumatic tire.

### Description of the Related Art

A pneumatic tire includes a rubber part obtained by vulcanizing and molding a rubber composition as a raw material. In such a rubber composition, a filler such as carbon black or silica is generally added in order to improve the reinforcing effect. In recent years, a rubber composition containing graphene as a filler has also been reported.

Patent Document 1 below describes a rubber composition containing a diene-based rubber, graphene oxide, and carbon black, in which a content of the graphene oxide is 0.1 to 10 parts by mass and a content of the carbon black is 30 to 80 parts by mass per 100 parts by mass of the diene-based rubber, and an oxygen content of the graphene oxide is 45 to 60 atom%.

Patent Document 2 below describes a curable rubber formulation having a base rubber composition, 0.1 to 20 wt% graphene carbon particles with a bent 3D shape and an oxygen content of 2 atomic% or less, and 1 to 50 wt% filler particles containing silica, and having a surface resistivity of less than 10¹⁰ Ω/sq when cured.

Patent Document 3 below describes an elastomeric compound containing: at least one elastomer resistant to heating at 100°C for 70 hours, so as to exhibit at least one of the following properties: (a) a change in durometer hardness of no more than 15 points, (b) a change in tensile strength of no more than 40%, and (c) a change in ultimate elongation of no more than 40%; at least one graphene-based material present in an amount in the range of 0.01 to 30 phr with respect to the at least one elastomer, in which the at least one graphene-based material is selected from reduced graphene oxides and has a BET surface area in the range of 40 to 1,600 m²/g; and at least one carbon black present in an amount in the range of 15 to 150 phr with respect to the at least one elastomer.

Patent Document 4 below describes a composition containing a graphene sheet, at least one reinforcing material containing silicon, and at least one rubber.

Patent Document 5 below describes a composition containing a graphene sheet, at least one reinforcing material containing silicon, and at least one rubber, and containing 2 to 4 parts by weight of the graphene sheet per 100 parts by weight of the rubber.

### Prior Art Document

### Patent Documents

Patent Document 1: JP-B2-7385429
Patent Document 2: JP-B2-6087424
Patent Document 3: JP-B2-6802281
Patent Document 4: JP-A-2018-15054
Patent Document 5: JP-B2-6404121

### SUMMARY OF THE INVENTION

As a result of intensive studies by the present inventor, it has been found that in a rubber composition containing graphene as a filler, processability is deteriorated due to aggregation of graphene in rubber. As a result of further intensive studies for improving the processability, it has been found that the processability of the rubber composition is significantly improved by using graphene having specific physical properties.

Further, as a result of intensive studies by the present inventor, it has been found that in a vulcanized rubber of a rubber composition containing graphene and silica as fillers, tear resistance is deteriorated due to aggregation of graphene in the rubber. As a result of further intensive studies for improving the tear resistance of the vulcanized rubber, it has been found that the tear resistance of the vulcanized rubber is significantly improved by using graphene having specific physical properties in combination with silica.

In view of the above circumstances, it is an object of the present invention to provide a rubber composition having excellent processability and a pneumatic tire containing a vulcanized rubber of the rubber composition.

Further, in view of the above circumstances, it is an object of the present invention to provide a rubber composition as a raw material of a vulcanized rubber excellent in tear resistance, and a pneumatic tire containing a vulcanized rubber of the rubber composition.

The above object can be achieved by the following configurations. That is, the present invention relates to a rubber composition (1) comprising a diene-based rubber and graphene, wherein the graphene is graphene having a specific surface area of 200 m²/g or less, a particle size of 10 µm or less, an average thickness of particles of 10 nm or less, and an oxygen content of 1% by mass or less.

In the rubber composition (1), a rubber composition (2) in which a content of the graphene is 0.5 to 30 parts by mass when a total amount of the diene-based rubber is taken as 100 parts by mass is preferred.

In the rubber composition (1) or (2), a rubber composition (3) in which the rubber composition does not contain (N-(1,3-dimethylbutyl)-N'-phenyl-p-phenylenediamine) is preferred.

The present invention also relates to a pneumatic tire (4) comprising a vulcanized rubber of any one of the rubber compositions (1) to (3).

The above object can also be achieved by the following configurations. That is, the present invention relates to a rubber composition (5) comprising a diene-based rubber, silica, and graphene, wherein the graphene is graphene having a specific surface area of 200 m²/g or less, a particle size of 10 µm or less, an average thickness of particles of 10 nm or less, and an oxygen content of 1% by mass or less.

In the rubber composition (5), a rubber composition (6) in which a content of the graphene is 0.5 to 30 parts by mass when a total amount of the diene-based rubber is taken as 100 parts by mass is preferred.

In the rubber composition (5) or (6), a rubber composition (7) in which a content of the silica is 60 to 120 parts by mass when a total amount of the diene-based rubber is taken as 100 parts by mass is preferred.

In any one of the rubber composition (5) to (7), a rubber composition (8) in which the rubber composition does not contain (N-(1,3-dimethylbutyl)-N'-phenyl-p-phenylenediamine) is preferred.

The present invention also relates to a pneumatic tire (9) comprising a vulcanized rubber of any one of the rubber compositions (5) to (8).

When the graphene is kneaded in the diene-based rubber, the graphene is generally easily aggregated and hardly dispersed. However, since the graphene used in the present invention is designed to have a specific specific surface area, particle size, average thickness of particles, and oxygen content, the graphene is hardly aggregated and easily dispersed in the diene-based rubber. As a result, the processability of the rubber composition is significantly improved.

In addition, when the graphene is kneaded in the diene-based rubber, the graphene is generally easily aggregated and hardly dispersed. However, the graphene used in the present invention is designed to have a specific surface area, particle size, average thickness of particles, and oxygen content. Therefore, when such graphene and silica are kneaded in the diene-based rubber, at least one or both of the graphene and the silica exhibit a dispersion-aiding effect on each other, so that the graphene and the silica are hardly aggregated and easily dispersed in the diene-based rubber. As a result, the tear resistance of the vulcanized rubber obtained from the rubber composition as a raw material is significantly improved.

### DETAILED DESCRIPTION OF THE PREFERRED EMBODIMENTS

The rubber composition according to the first embodiment of the present invention contains a diene-based rubber and graphene.

The rubber composition according to the first embodiment of the present invention contains a diene-based rubber. Examples of the diene-based rubber include, but are not limited to, natural rubber (NR), isoprene rubber (IR), butadiene-based rubber (BR), styrene-butadiene-based rubber (SBR), acrylonitrile-butadiene-based rubber (NBR), chloroprene rubber (CR), a styrene-isoprene copolymer rubber, a butadiene-isoprene copolymer rubber, and a styrene-isoprene-butadiene copolymer rubber. These diene-based rubbers may be used singly or in combination of two or more of them. In the present invention, it is particularly preferable to use natural rubber (NR) and/or butadiene rubber (BR) .

The graphene used in the present invention is designed to have a specific surface area, particle size, average thickness of particles, and oxygen content. Graphene is a two-dimensional sheet-like substance classified as a nanocarbon material, and has a structure spread with six-membered rings made of sp² carbon. By having such a structure, anti-aging performance can be imparted to the finally obtained vulcanized rubber. This point will be described later.

The graphene used in the present invention is designed to have a BET specific surface area of 200 m²/g or less. From the viewpoint of improving the dispersibility in the diene-based rubber, it is preferable to use graphene having a BET specific surface area of 80 m²/g or less. In the present invention, the BET specific surface area of graphene is measured according to BET method described in JIS K6430.

The particle size of the graphene used in the present invention is designed to be 10 µm or less. From the viewpoint of improving the dispersibility in the diene-based rubber, it is preferable to use graphene having a particle size of 7 µm or less. In the present invention, the particle size of graphene is a particle size (D50) at an integrated value of 50% in a particle size distribution (volume basis) measured by a laser diffraction/scattering method.

The average thickness of the graphene particles used in the present invention is designed to be 10 nm or less. From the viewpoint of improving the dispersibility in the diene-based rubber, it is preferable to use graphene having an average thickness of particles of 3 nm or less. In the present invention, the average thickness of the graphene particles is calculated from the thickness measured by transmission electron microscope (TEM) observation. The average thickness of 100 graphene particles is measured, and the arithmetic mean thereof is taken as the average thickness of the graphene particles.

The oxygen content of the graphene used in the present invention is designed to be 1% by mass or less. From the viewpoint of improving the dispersibility in the diene-based rubber, it is preferable to use graphene having an oxygen content of 1% by mass or less. In the present invention, the oxygen content of the graphene is determined using X-ray photoelectron spectroscopy (for example, the methods described in D.R. Dreyer et al., Chem. Soc. Rev. 39, 228-240 (2010)).

Graphene is a two-dimensional sheet-like substance classified as a nanocarbon material, and graphene easily forms a layered structure by being aggregated or bonded to each other by van der Waals force. However, the graphene used in the present invention preferably has a layered structure of 20 layers or less.

From the viewpoint of improving the processability of the rubber composition, a content of the graphene is preferably 0.5 to 30 parts by mass, more preferably 1.5 to 10 parts by mass when a total amount of the diene-based rubber is taken as 100 parts by mass.

The rubber composition according to the first embodiment of the present invention may contain a filler other than graphene. Examples of the filler include carbon black and silica.

Examples of the carbon black that can be used include carbon blacks usually used in the rubber industry, such as SAF, ISAF, HAF, FEF, and GPF; and conductive carbon blacks such as acetylene black and ketjen black. In the rubber composition according to the first embodiment of the present invention, a content of the carbon black may be 20 to 150 parts by mass, 30 to 100 parts by mass, or 40 to 80 parts by mass when a total amount of the diene-based rubber is taken as 100 parts by mass. The content of the carbon black is preferably 40 to 80 parts by mass.

Examples of the silica to be used include silicas usually used for rubber reinforcement, such as wet silica, dry silica, sol-gel silica, and surface-treated silica. Among these, wet silica is preferred. In the rubber composition according to the first embodiment of the present invention, a content of the silica may be 5 to 130 parts by mass, 10 to 80 parts by mass, or 20 to 50 parts by mass when a total amount of the diene-based rubber is taken as 100 parts by mass.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Evonik Japan Co., Ltd.), bis(3-triethoxysilylpropyl)disulfide (e.g., "Si75" manufactured by Evonik Japan Co., Ltd.), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane. The content of the silane coupling agent is preferably 2 to 20 mass% when a total amount of silica is taken as 100 mass%.

The rubber composition according to the first embodiment of the present invention contains a diene-based rubber and graphene. The rubber composition according to the present invention may contain, in addition to the above, a filler such as carbon black or silica, a vulcanizing agent, an antiaging agent, zinc oxide, stearic acid, a softener such as wax or oil, a processing aid, and others.

As the vulcanizing agent, sulfur and a vulcanization accelerator can be suitably used.

The sulfur may be ordinary sulfur for rubber, and sulfur such as powdered sulfur, precipitated sulfur, insoluble sulfur, or highly dispersible sulfur can be used. In the rubber composition according to the first embodiment of the present invention, a content of sulfur is preferably 0.1 to 5 parts by mass, more preferably 0.5 to 3 parts by mass when a total amount of the diene-based rubber is taken as 100 parts by mass.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination. In the rubber composition according to the first embodiment of the present invention, a content of the vulcanization accelerator is preferably 0.1 to 5 parts by mass, more preferably 0.5 to 3 parts by mass when a total amount of the diene-based rubber is taken as 100 parts by mass.

Examples of the antiaging agent include an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, which are usually used for rubbers. However, from the viewpoint of recent environmentally friendly product development, reduction in the amount of fossil fuel-based materials used and replacement with other materials have been studied. Since the graphene used in the present invention has a structure spread with six-membered rings made of sp² carbon, the remaining electrons in the sp² mixed orbital can trap radicals that cause aging of the vulcanized rubber. Therefore, in consideration of the environment, it is preferable that the rubber composition according to the present invention contains a diene-based rubber and graphene, and does not contain or contains a reduced amount of N-(1,3-dimethylbutyl)-N'-phenyl-p-phenylenediamine (6PPD). In the rubber composition according to the first embodiment of the present invention, a content of the antiaging agent is preferably 1 to 10 parts by mass, more preferably 2 to 5 parts by mass when a total amount of the diene-based rubber is taken as 100 parts by mass.

The rubber composition according to the first embodiment of the present invention is obtained by kneading the diene-based rubber and graphene, the filler such as carbon black or silica, the vulcanizing agent, the antiaging agent, zinc oxide, stearic acid, the softener such as wax or oil, the processing aid, and others using a kneading machine usually used in the rubber industry, such as a Banbury mixer, a kneader, or a roll.

A method for blending the above components is not limited, and any one of the following methods may be used: a method in which components to be blended other than vulcanization-type compounding agents such as sulfur and a vulcanization accelerator are previously kneaded to prepare a master batch, the remaining components are added to the master batch, and the resultant is further kneaded, a method in which components are added in any order and kneaded, and a method in which all the components are added at the same time and kneaded.

Since the vulcanized rubber of the rubber composition according to the first embodiment of the present invention has excellent dispersibility of graphene in the diene-based rubber, the reinforcing effect by graphene is effectively exhibited. Therefore, a vulcanized rubber of the rubber composition according to the present invention is particularly useful for a rubber part of the pneumatic tire.

The rubber composition according to the second embodiment of the present invention contains a diene-based rubber, silica and graphene.

The rubber composition according to the second embodiment of the present invention contains a diene-based rubber. Examples of the diene-based rubber include, but are not limited to, natural rubber (NR), isoprene rubber (IR), butadiene-based rubber (BR), styrene-butadiene-based rubber (SBR), acrylonitrile-butadiene-based rubber (NBR), chloroprene rubber (CR), a styrene-isoprene copolymer rubber, a butadiene-isoprene copolymer rubber, and a styrene-isoprene-butadiene copolymer rubber. These diene-based rubbers may be used singly or in combination of two or more of them. In the present invention, it is particularly preferable to use styrene-butadiene-based rubber (SBR) and/or butadiene rubber (BR).

Examples of the silica to be used include silicas usually used for rubber reinforcement, such as wet silica, dry silica, sol-gel silica, and surface-treated silica. Among these, wet silica is preferred. In the rubber composition according to the second embodiment of the present invention, a content of the silica is preferably 60 to 120 parts by mass, more preferably 70 to 100 parts by mass when a total amount of the diene-based rubber is taken as 100 parts by mass.

In the rubber composition according to the second embodiment of the present invention, when silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Evonik Japan Co., Ltd.), bis(3-triethoxysilylpropyl)disulfide (e.g., "Si75" manufactured by Evonik Japan Co., Ltd.), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane. The content of the silane coupling agent is preferably 2 to 20 mass% when a total amount of silica is taken as 100 mass%.

The graphene used in the present invention is designed to have a specific surface area, particle size, average thickness of particles, and oxygen content. Graphene is a two-dimensional sheet-like substance classified as a nanocarbon material, and has a structure spread with six-membered rings made of sp² carbon. By having such a structure, anti-aging performance can be imparted to the finally obtained vulcanized rubber. This point will be described later.

The graphene used in the present invention is designed to have a BET specific surface area of 200 m²/g or less. From the viewpoint of improving the dispersibility in the diene-based rubber, it is preferable to use graphene having a BET specific surface area of 80 m²/g or less. In the present invention, the BET specific surface area of graphene is measured according to BET method described in JIS K6430.

The particle size of the graphene used in the present invention is designed to be 10 µm or less. From the viewpoint of improving the dispersibility in the diene-based rubber, it is preferable to use graphene having a particle size of 7 µm or less. In the present invention, the particle size of graphene is a particle size (D50) at an integrated value of 50% in a particle size distribution (volume basis) measured by a laser diffraction/scattering method.

The average thickness of the graphene particles used in the present invention is designed to be 10 nm or less. From the viewpoint of improving the dispersibility in the diene-based rubber, it is preferable to use graphene having an average thickness of particles of 3 nm or less. In the present invention, the average thickness of the graphene particles is calculated from the thickness measured by transmission electron microscope (TEM) observation. The average thickness of 100 graphene particles is measured, and the arithmetic mean thereof is taken as the average thickness of the graphene particles.

The oxygen content of the graphene used in the present invention is designed to be 1% by mass or less. From the viewpoint of improving the dispersibility in the diene-based rubber, it is preferable to use graphene having an oxygen content of 1% by mass or less. In the present invention, the oxygen content of the graphene is determined using X-ray photoelectron spectroscopy (for example, the methods described in D.R. Dreyer et al., Chem. Soc. Rev. 39, 228-240 (2010)).

Graphene is a two-dimensional sheet-like substance classified as a nanocarbon material, and graphene easily forms a layered structure by being aggregated or bonded to each other by van der Waals force. However, the graphene used in the present invention preferably has a layered structure of 20 layers or less.

From the viewpoint of improving the processability of the rubber composition, a content of the graphene is preferably 0.5 to 30 parts by mass, more preferably 1.5 to 10 parts by mass when a total amount of the diene-based rubber is taken as 100 parts by mass.

The rubber composition according to the second embodiment of the present invention may contain a filler other than graphene and silica. Examples of the filler include carbon black.

Examples of the carbon black that can be used include carbon blacks usually used in the rubber industry, such as SAF, ISAF, HAF, FEF, and GPF; and conductive carbon blacks such as acetylene black and ketjen black. In the rubber composition according to the second embodiment of the present invention, a content of the carbon black may be 20 to 150 parts by mass, 30 to 100 parts by mass, or 40 to 80 parts by mass when a total amount of the diene-based rubber is taken as 100 parts by mass. The content of the carbon black is preferably 40 to 80 parts by mass.

The rubber composition according to the second embodiment of the present invention contains a diene-based rubber, graphene and silica. The rubber composition according to the present invention may contain, in addition to the above, a filler such as carbon black, a vulcanizing agent, an antiaging agent, zinc oxide, stearic acid, a softener such as wax or oil, a processing aid, and others.

As the vulcanizing agent, sulfur and a vulcanization accelerator can be suitably used.

The sulfur may be ordinary sulfur for rubber, and sulfur such as powdered sulfur, precipitated sulfur, insoluble sulfur, or highly dispersible sulfur can be used. In the rubber composition according to the second embodiment of the present invention, a content of sulfur is preferably 0.1 to 5 parts by mass, more preferably 0.5 to 3 parts by mass when a total amount of the diene-based rubber is taken as 100 parts by mass.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination. In the rubber composition according to the second embodiment of the present invention, a content of the vulcanization accelerator is preferably 0.1 to 5 parts by mass, more preferably 0.5 to 3 parts by mass when a total amount of the diene-based rubber is taken as 100 parts by mass.

Examples of the antiaging agent include an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, which are usually used for rubbers. However, from the viewpoint of recent environmentally friendly product development, reduction in the amount of fossil fuel-based materials used and replacement with other materials have been studied. Since the graphene used in the present invention has a structure spread with six-membered rings made of sp² carbon, the remaining electrons in the sp² mixed orbital can trap radicals that cause aging of the vulcanized rubber. Therefore, in consideration of the environment, it is preferable that the rubber composition according to the present invention contains a diene-based rubber and graphene, and does not contain or contains a reduced amount of N-(1,3-dimethylbutyl)-N'-phenyl-p-phenylenediamine (6PPD). In the rubber composition according to the second embodiment of the present invention, a content of the antiaging agent is preferably 1 to 10 parts by mass, more preferably 2 to 5 parts by mass when a total amount of the diene-based rubber is taken as 100 parts by mass.

The rubber composition according to the second embodiment of the present invention is obtained by kneading the diene-based rubber, graphene and silica, the filler such as carbon black, the vulcanizing agent, the antiaging agent, zinc oxide, stearic acid, the softener such as wax or oil, the processing aid, and others using a kneading machine usually used in the rubber industry, such as a Banbury mixer, a kneader, or a roll.

A method for blending the above components is not limited, and any one of the following methods may be used: a method in which components to be blended other than vulcanization-type compounding agents such as sulfur and a vulcanization accelerator are previously kneaded to prepare a master batch, the remaining components are added to the master batch, and the resultant is further kneaded, a method in which components are added in any order and kneaded, and a method in which all the components are added at the same time and kneaded.

Since the vulcanized rubber of the rubber composition according to the second embodiment of the present invention has excellent dispersibility of graphene in the diene-based rubber, the reinforcing effect by graphene is effectively exhibited. Therefore, a vulcanized rubber of the rubber composition according to the present invention is particularly useful for a rubber part of the pneumatic tire.

### Examples

Hereinbelow, the present invention will be more specifically described with reference to examples according to the first embodiment of the present invention.

### (Preparation of rubber compositions)

A rubber composition of each of Examples 1 to 4 and Comparative Examples 1 to 2 was prepared by blending compounding agents with 100 parts by mass of a rubber component in accordance with the formulation shown in Table 1 and kneading the resultant using an ordinary Banbury mixer. The compounding agents shown in Table 1 are as follows.

### (Diene-based rubber)

· Butadiene rubber: trade name "UBEPOL BR150B", manufactured by UBE Corporation
· Natural rubber: RSS#3

### (Graphene)

· Graphene 1: trade name "av-PLAT-7", manufactured by Avanzare, specific surface area 70 m²/g, particle size (Lateral size (LD50)) 7.2 µm, average thickness of particles 3 nm, oxygen content (XPS) < 1% by mass, layer structure of 5 to 10 layers
· Graphene 2: trade name "av-PLAT-2", manufactured by Avanzare, specific surface area > 200 m²/g, particle size (Lateral size (LD50)) 2 µm, average thickness of particles < 10 nm, oxygen content (XPS) < 1% by mass, layer structure of 20 layers or less
· Graphene 3: trade name "Graphene Nanoplatelets Aggregates (sub-micron particles, surface area 500 m²/g)", manufactured by Tokyo Chemical Industry Co., Ltd., specific surface area 500 m²/g, particle size 2 µm, average thickness of particles 10 nm or less, oxygen content 0.5 mass% or less
· Graphene 4: trade name "Graphene Nanoplatelets Aggregates (sub-micron particles, surface area 750m2/g)", manufactured by Tokyo Chemical Industry Co., Ltd., specific surface area 750 m²/g, particle size 2 µm, average thickness of particles 10 nm or less, oxygen content 0.5 mass% or less

### (Filler)

· Carbon black: trade name "Seast KH", manufactured by TOKAI CARBON CO., LTD.

### (Other compounding agents)

· Zinc oxide: trade name "Zinc White #3" manufactured by Mitsui Mining & Smelting Corporation
· Stearic acid: trade name "LUNAC S-20" manufactured by Kao Corporation

### (Vulcanizing agent)

· Sulfur: trade name "Powder Sulfur", manufactured by Tsurumi Chemical Industry Co., ltd.
· vulcanization accelerator (sulfenamide-based vulcanization accelerator): trade name "SOXINOL CZ", manufactured by SUMITOMO CHEMICAL COMPANY, LIMITED

An unvulcanized sample of a rubber composition of each of Examples 1 to 4 and Comparative Examples 1 to 2 obtained above was prepared, and then t5 (processability) was evaluated by the following method.

### (t5 (Processability) of rubber compositions)

A t5 value was measured by a Mooney scorch tester (L-type rotor) based on JIS K6300-1 under conditions of a preheating time of 1 minute and a temperature of 125°C, and expressed as an index relative to the value of Comparative Example 1 regarded as 100. The larger index indicates that scorch is less likely to occur and the scorch (processability) is more excellent.

**[Table 1]**

| | Comparative Example 1 | Comparative Example 2 | Example 1 | Example 2 | Example 3 | Example 4 |
|---|---|---|---|---|---|---|
| (Formulation) | | | | | | |
| Butadiene rubber | 50 | 50 | 50 | 50 | 50 | 50 |
| Natural rubber | 50 | 50 | 50 | 50 | 50 | 50 |
| Carbon black | 30 | 30 | 30 | 30 | 30 | 30 |
| Zinc oxide | 3 | 3 | 3 | 3 | 3 | 3 |
| Stearic acid | 2 | 2 | 2 | 2 | 2 | 2 |
| Graphene 1 | - | - | 1.5 | 4 | 10 | - |
| Graphene 2 | - | - | - | - | - | 2 |
| Graphene 3 | 2 | - | - | - | - | - |
| Graphene 4 | - | 2 | - | - | - | - |
| vulcanization accelerator | 1 | 1 | 1 | 1 | 1 | 1 |
| Sulfur | 2 | 2 | 2 | 2 | 2 | 2 |

| (Evaluation) | | | | | | |
|---|---|---|---|---|---|---|
| t5 (Processabi lity) | 100 | 99 | 106 | 111 | 116 | 102 |

From the results in Table 1, it is found that the rubber compositions according to Examples 1 to 3 had a high scorch and excellent processability. The rubber composition according to Example 4 also had a high scorch and excellent processability, but the effect was inferior to those of Examples 1 to 3.

Hereinbelow, the present invention will be more specifically described with reference to examples according to the second embodiment of the present invention.

### (Preparation of rubber compositions)

A rubber composition of each of Examples 5 to 8 and Comparative Examples 3 to 6 was prepared by blending compounding agents with 100 parts by mass of a rubber component in accordance with the formulation shown in Table 2 and kneading the resultant using an ordinary Banbury mixer. The compounding agents shown in Table 2 are as follows.

### (Diene-based rubber)

· Styrene-butadiene rubber: trade name "SBR1723", manufactured by JSR Corporation
· Butadiene rubber: trade name "UBEPOL BR150B", manufactured by UBE Corporation

### (Graphene)

· Graphene 1: trade name "av-PLAT-7", manufactured by Avanzare, specific surface area 70 m²/g, particle size (Lateral size (LD50)) 7.2 µm, average thickness of particles 3 nm, oxygen content (XPS) < 1% by mass, layer structure of 5 to 10 layers
· Graphene 2: trade name "av-PLAT-2", manufactured by Avanzare, specific surface area > 200 m²/g, particle size (Lateral size (LD50)) 2 µm, average thickness of particles < 10 nm, oxygen content (XPS) < 1% by mass, layer structure of 20 layers or less
· Graphene 3: trade name "Graphene Nanoplatelets Aggregates (sub-micron particles, surface area 500 m²/g)", manufactured by Tokyo Chemical Industry Co., Ltd., specific surface area 500 m²/g, particle size 2 µm, average thickness of particles 10 nm or less, oxygen content 0.5 mass% or less
· Graphene 4: trade name "Graphene Nanoplatelets Aggregates (sub-micron particles, surface area 750m2/g)", manufactured by Tokyo Chemical Industry Co., Ltd., specific surface area 750 m²/g, particle size 2 µm, average thickness of particles 10 nm or less, oxygen content 0.5 mass% or less

### (Filler)

· Silica: trade name "Nipsil AQ", manufactured by TOSOH SILICA CO., LTD.

### (Other compounding agents)

· Silane coupling agent: trade name "Si 75" manufactured by Evonik CO., LTD.
· Zinc oxide: trade name "Zinc White #1" manufactured by Mitsui Mining & Smelting Corporation
· Stearic acid: trade name "LUNAC S-20" manufactured by Kao Corporation
· Antiaging agent: trade name "Antigen 6C" manufactured by SUMITOMO CHEMICAL COMPANY, LIMITED

### (Vulcanizing agent)

· Sulfur: trade name "Powder Sulfur", manufactured by Tsurumi Chemical Industry Co., ltd.
· vulcanization accelerator 1 (sulfenamide-based vulcanization accelerator): trade name "SOXINOL CZ", manufactured by SUMITOMO CHEMICAL COMPANY, LIMITED
· vulcanization accelerator 2 (thiazole-based vulcanization accelerator): trade name "SUNCELER DM", manufactured by SANSHIN CHEMICAL COMPANY, LIMITED

An unvulcanized sample of a rubber composition of each of Examples 5 to 8 and Comparative Examples 3 to 6 obtained above was prepared. Furthermore, each unvulcanized sample was vulcanized at 160°C for 20 minutes to produce a vulcanized rubber, and tear resistance was evaluated under the following conditions.

### (Tear resistance of vulcanized rubbers)

A crescent test piece specified in JIS K6252 was punched out and a nick of 0.50 ± 0.08 mm was made at the center of a depression to obtain a sample. The sample was tested using a tensile tester manufactured by SHIMADZU CORPORATION at a tensile speed of 500 mm/min. The value was expressed as an index relative to the value of Comparative Example 3 regarded as 100. The larger the index, the better the tear resistance.

**[Table 2]**

| | Comparative Example 3 | Comparative Example 4 | Comparative Example 5 | Example 5 | Example 6 | Example 7 | Example 8 | Example 9 |
|---|---|---|---|---|---|---|---|---|
| (Formulation) | | | | | | | | |
| Styrene-butadiene rubber | 70 | 70 | 70 | 70 | 70 | 70 | 70 | 70 |
| Butadiene rubber | 30 | 30 | 30 | 30 | 30 | 30 | 30 | 30 |
| Silica | 70 | 100 | 70 | 70 | 85 | 100 | 70 | 70 |
| Silane coupling agent | 7 | 10 | 7 | 7 | 8 | 10 | 7 | 7 |
| Zinc oxide | 2 | 2 | 2 | 2 | 2 | 2 | 2 | 2 |
| Stearic acid | 2 | 2 | 2 | 2 | 2 | 2 | 2 | 2 |
| Antiaging agent | 2 | 2 | 2 | 2 | 2 | 2 | 2 | 2 |
| Graphene 1 | - | - | - | 2 | 4 | 10 | 15 | - |
| Graphene 2 | - | - | - | - | - | - | - | 2 |
| Graphene 3 | 2 | 2 | - | - | - | - | - | - |
| Graphene 4 | - | - | 2 | - | - | - | - | - |
| Sulfur | 2 | 2 | 2 | 2 | 2 | 2 | 2 | 2 |
| vulcanization accelerator 1 | 2 | 2 | 2 | 2 | 2 | 2 | 2 | 2 |
| vulcanization accelerator 2 | 2 | 2 | 2 | 2 | 2 | 2 | 2 | 2 |

| (Evaluation) | | | | | | | | |
|---|---|---|---|---|---|---|---|---|
| TR (Tear resistance) | 100 | 95 | 94 | 107 | 106 | 101 | 94 | 105 |

From the results in Table 2, it is found that the vulcanized rubber of the rubber compositions according to Examples 5 to 8 were excellent tear resistance.

## Claims

1. A rubber composition comprising a diene-based rubber and graphene, wherein
the graphene is graphene having a specific surface area of 200 m²/g or less, a particle size of 10 µm or less, an average thickness of particles of 10 nm or less, and an oxygen content of 1% by mass or less.

2. The rubber composition according to claim 1, wherein a content of the graphene is 0.5 to 30 parts by mass when a total amount of the diene-based rubber is taken as 100 parts by mass.

3. The rubber composition according to claim 1 or 2, wherein the rubber composition does not contain (N-(1,3-dimethylbutyl)-N'-phenyl-p-phenylenediamine).

4. A pneumatic tire comprising at least a vulcanized rubber of the rubber composition according to any one of claims 1 to 3.

5. A rubber composition comprising a diene-based rubber, silica, and graphene, wherein
the graphene is graphene having a specific surface area of 200 m²/g or less, a particle size of 10 µm or less, an average thickness of particles of 10 nm or less, and an oxygen content of 1% by mass or less.

6. The rubber composition according to claim 5, wherein a content of the graphene is 0.5 to 30 parts by mass when a total amount of the diene-based rubber is taken as 100 parts by mass.

7. The rubber composition according to claim 5 or 6, wherein a content of the silica is 60 to 120 parts by mass when a total amount of the diene-based rubber is taken as 100 parts by mass.

8. The rubber composition according to any one of claims 5 to 7, wherein the rubber composition does not contain (N-(1,3-dimethylbutyl)-N'-phenyl-p-phenylenediamine).

9. A pneumatic tire comprising at least a vulcanized rubber of the rubber composition according to any one of claims 5 to 8.
